(19) Europäisches Patentamt
European Patent Office
Office européen des brevets

(11) **EP 2 656 480 B1**

(12) **EUROPEAN PATENT SPECIFICATION**

(45) Date of publication and mention
of the grant of the patent:
**14.10.2015 Bulletin 2015/42**

(51) Int Cl.:
*H02K 29/03* (2006.01)     *H02K 41/02* (2006.01)
*H02K 1/12* (2006.01)     *H02K 1/02* (2006.01)
*H02K 1/27* (2006.01)     *H02K 1/14* (2006.01)

(21) Application number: **11802387.8**

(22) Date of filing: **20.12.2011**

(86) International application number:
**PCT/EP2011/073347**

(87) International publication number:
**WO 2012/084905 (28.06.2012 Gazette 2012/26)**

(54) **STATOR FOR A MODULATED POLE MACHINE**

STATOR FÜR EINE MODULIERTE POLMASCHINE

STATOR POUR MACHINE À PÔLES MODULÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.12.2010 DK 201070573**
**22.12.2010 US 201061426017 P**

(43) Date of publication of application:
**30.10.2013 Bulletin 2013/44**

(73) Proprietor: **Höganäs AB (publ)**
**26383 Höganäs (SE)**

(72) Inventor: **NORD, Göran**
**S-25251 Helsingborg (SE)**

(56) References cited:
**WO-A1-2007/024184     JP-A- 2007 209 176
US-A- 5 708 318     US-A- 6 044 737
US-A1- 2008 018 194     US-B1- 6 545 383**

**Description**

**Field of the invention**

This invention generally relates to modulated pole machines. More particularly, the invention relates to a stator for such a modulated pole machine.

**Background of the invention**

Over the years, electric machine designs such as modulated pole machines, e.g. claw pole machines, Lundell machines and transverse flux machines (TFM) have become more and more interesting. Electric machines using the principles of these machines were disclosed as early as about 1910 by Alexandersson and Fessenden. One of the most important reasons for the increasing interest is that the design enables a very high torque output in relation to, for instance, induction machines, switched reluctance machines and even permanent magnet brushless machines. Further, such machines are advantageous in that the coil is often easy to manufacture. However, one of the drawbacks of the design is that they are typically relatively expensive to manufacture and that they experience a high leakage flux which causes a low power factor and a heed for more magnetic material. The low power factor requires an up-sized power electronic circuit (or power supply when the machine is used synchronously) that also increases the volume, weight and cost of the total drive.

Stators of modulated pole electric machines generally use a central single winding that will magnetically feed multiple teeth formed by a soft magnetic core structure. The soft magnetic core is then formed around the winding, while for other common electrical machine structures the winding is formed around a tooth of the core section. Examples of the modulated pole machine topology are sometimes recognised as e.g. Claw-pole-, Crow-feet-, Lundell-or TFM-machines. The modulated pole machine with buried magnets is further characterised by an active rotor structure including a plurality of permanent magnets being separated by rotor pole sections.

The transverse flux machine (TFM) topology is an example of a modulated pole machine. It is known to have a number of advantages over conventional machines. The basic design of a single-sided radial flux stator is characterized by a single, simple phase winding parallel to the air gap and with a more or less U-shaped yoke section surrounding the winding and exposing in principal two parallel rows of teeth's facing the air gap. Multi-phase arrangements include magnetically separated single phase units stacked perpendicular to the direction of motion of the rotor or mover. The phases are then electrically and magnetically shifted by 120 degrees for a three-phase arrangement to smooth the operation and produce a more or less even force or torque independent of the position of the rotor or mover. Note here that the angle referred to is given in electrical degrees which is equivalent to mechanical degrees divided by the number of pairs of magnetic poles.

A cylindrical motor uses a concentric stator and rotor, and the motion is then considered as rotational or as an end-less rotation. A linear machine uses translation motion that is normally not a closed motion pattern but may be a back-and-forward motion along a 'line'. The linear machine or driver has a mover instead of a rotor. The magnetic circuit may be arranged by the same basic magnetic principles in both a rotor and mover, however the geometries will differ.

An example of an efficient rotor or mover arrangement is the use of so called buried magnets combined with soft magnetic pole sections or pieces to allow the permanent magnet field to flux-concentrate or be flexible in a direction transverse to the motion as e.g. described in the patent application WO2007/024184 by Jack et al.

WO2007/024184 discloses an electrical, rotary machine, which includes a first stator core section being substantially circular and including a plurality of teeth, a second stator core section being substantially circular and including a plurality of teeth, a coil arranged between the first and second circular stator core sections, and a rotor including a plurality of permanent magnets. The first stator core section, the second stator core section, the coil and the rotor are encircling a common geometric axis, and the plurality of teeth of the first stator core section and the second stator core section are arranged to protrude towards the rotor. Additionally the teeth of the second stator core section are Circumferentially displaced in relation to the teeth of the first stator core section, and the permanent magnets in the rotor are separated in the circumferential direction from each other by axially extending pole sections made from soft magnetic material.

US 2008/0018194 A1 describes a single phase claw-pole type motor wherein a concave part or a convex part is provided on an air-gap surface of claims of the stator core.

US 6,545,383 B1 discloses a rotor assembly for an electromechanical machine including iron rotor pole pieces containing a plurality of finger claws.

It is generally desirable to provide a stator for a modulated pole machine that is relatively inexpensive in production and assembly. It is further desirable to provide such a stator that has good performance parameters, such as one or more of the following: high structural stability, low magnetic reluctance, efficient flux path guidance, low weight, small size, high volume specific performance, etc.

An undesirable effect occurring in electrical machines is the so-called cogging torque, i.e. the torque .due to the interaction between permanent magnets of the moving device and the stator. It is also known as detent or 'no-current' torque.

In many applications cogging has to be low due to noise and vibration requirements. For example, if the machine is used as a generator in a windmill the cogging torque has to be low in order to have the generator to rotate at very low wind speeds. In case of smaller motors, up to some 50-100 Nm, cogging torque can easily be noticed by rotating the motor by hand.

In the context of a modulated pole machine (MPM), the amount of cogging torque depends on a large variety of factors. Even though some known measures for reducing torque exist, cogging reduction often increases the cost of the machine since the design will be more complex. Examples of methods that add costs arid complexity are skewing the rotor and/or the stator. It is thus desirable to reduce the cogging of a modulated pole machine while avoiding an increase in machine complexity and/or cost. It is further desirable to provide a machine that can be manufactured efficiently and at low cost.

## Summary

According to a first aspect, disclosed herein is a modulated pole machine according to claim 1. The modulated pole machine comprising a stator, a moving device, and an active gap between respective interface surfaces of the moving device and the stator for communicating magnetic flux between the stator and the moving device, the moving device being adapted to move relative to the stator in a direction of motion, wherein the stator core section comprises a stator core back from which a plurality of teeth extend, each tooth extending in a respective first direction defining a direction towards the rotor, the teeth being arranged along a second direction defining the direction of motion, each tooth having at least one side wall facing a neighbouring tooth and an interface surface facing the active gap, the interface surface and the side wall forming an edge connecting the interface surface and the side wall; wherein the edge is round defining a radius of curvature in a plane spanned by the first and second directions; and wherein the radius of curvature varies along a lateral direction normal to said plane..

Hence, disclosed herein are embodiments for a modulated pole machine that can be efficiently produced and that reduces the cogging torque of the machine. In particular, embodiments of the stator core sections described herein are well-suited for production by Powder Metallurgy (P/M) production methods.

The shaping of the stator sections can be made without significantly increasing the manufacturing cost or complexity of the resulting machine. Furthermore, a modification of the rotor is not required.

The active gap is often also referred to as an air gap, as it is normally filled with air.

In embodiments of the modulated pole machine, the moving device comprises a plurality of permanent magnets separated from each other in the direction of motion by pole sections. The pole sections may be formed as rectilinear rods elongated in the lateral direction. The plurality of permanent magnets may be arranged so that every second magnet along the direction of motion is reversed in magnetisation direction. Thereby individual pole sections may only interface with magnets showing equal polarity. Generally, the permanent magnets may also be rectilinear rods elongated in the lateral direction; the rods may extend across the lateral extent of the active air gap.

In some embodiments, the stator core section and/or the pole pieces of the moving device are made from a soft magnetic material such as soft magnetic powder, thereby simplifying the manufacturing of the components of the modulated pole machine and providing an efficient magnetic flux concentration, utilizing the advantage of effective three-dimensional flux paths in the soft magnetic material allowing e.g. radial, axial and circumferential flux path components in a rotary machine.

The soft magnetic powder may e.g. be a soft magnetic Iron powder or powder containing Co or Ni or alloys containing parts of the same. The soft magnetic powder could be a substantially pure water atomised iron powder or a sponge iron powder having irregular shaped particles which have been coated with an electrical insulation. In this context the term "substantially pure" means that the powder should be substantially free from inclusions and that the amount of the impurities O, C and N should be kept at a minimum The average particle sizes are generally below 300 $\mu$m and above 10 $\mu$m.

However, any soft magnetic metal powder or metal alloy powder may be used as long as the soft magnetic properties are sufficient and that the powder is suitable for die compaction.

The electrical insulation of the powder particles may be made of an inorganic material. Especially suitable are the type of insulation disclosed in US 6348265 (which is hereby incorporated by reference), which concerns particles of a base powder consisting of essentially pure iron having an insulating oxygen- and phosphorus-containing barrier. Powders having insulated particles are available as Somaloy® 500, Somaloy® 550 or Somaloy® 700 available from Höganas AB, Sweden.

The varying radius of the edge connecting the side wall and the interface surface may efficiently be implemented by compacting the stator core section from soft magnetic powder in a suitabte compacting tool, such as a tool using a so-called shaped die.

Each stator core section comprise a stator core back section and a set of teeth extending from the stator core section, wherein the stator core back section connects the teeth. A stator core section may further comprise a yoke section that provides a flux path in the lateral direction towards another stator core section comprising another one of the sets of teeth of the same phase.

The core back section and the yoke section provide a flux path between neighboring teeth (which are displaced with respect to each other in the direction of motion) of the respective stator core sections.

In some embodiments the electric machine is a rotary machine, and the moving device is a rotor. In this case, the first stator core section, the second stator core section, the coil and the rotor may encircle a common geometric axis. In a rotary machine the lateral direction is an axial direction of the machine, and the direction of motion is a circumferential direction of the machine.

In some embodiments, the stator comprises: a first stator core section being substantially annular and including a plurality of teeth, a second stator core section being substantially annular and including a plurality of teeth, a coil arranged between the first and second circular stator core sections, wherein the first stator core section, the second stator core section, the coil and the rotor are encircling a common geometric axis defined by the longitudinal axis of the rotor, and wherein the plurality of teeth of the first stator core section and the second stator core section are arranged to protrude towards the rotor; wherein the teeth of the second stator core section are circumferentially displaced in relation to the teeth of the first stator core section.

In conventional machines, the coils explicitly form the multi-pole structure of the magnetic field, and the magnetic core function is just to carry this multi-pole field to link the magnet and/or other coils. In a modulated pole machine, it is the magnetic circuit which forms the multi-pole magnetic field from a much lower, usually two, pole field produced by the coil. In a modulated pole machine, the magnets usually form the matching multi-pole field explicitly but it is possible to have the magnetic circuit forming multi-pole fields from a single magnet. The modulated pole machine has a three-dimensional (3D) flux path utilizing magnetic flux paths in the transverse direction both in the stator and in the moving device, e.g. in the axial direction in a rotating machine, where the moving device is a rotor.

Thus in some embodiments the stator device and/or the moving device comprise a three-dimensional (3D) flux path including a flux path component in the transverse (i.e. lateral) direction relative to the direction of movement.

The present invention relates to different aspects including the modulated pole machine described above and in the following, and corresponding methods, devices, and/or product means, each yielding one or more of the benefits and advantages described in connection with the first mentioned aspect, and each having one or more embodiments corresponding to the embodiments described in connection with the first mentioned aspect and/or disclosed in the appended claims.

## Brief description of the drawings

The above and/or additional objects, features and advantages of the present invention, will be further elucidated by the following illustrative and nonlimiting detailed description of embodiments of the present invention, with reference to the appended drawings, wherein:

Fig. 1 shows an example of a modulated pole machine.

Fig. 2 shows a schematic view of an example of a stator for a modulated pole machine.

Fig. 3 shows a 3-phase modulated pole machine comprising a stator with 3 sets of stator component pairs, each holding one circumferential winding.

Fig. 4 shows another example of a stator for a modulated pole machine.

Fig. 5 shows a more detailed view of a portion of one of the teeth 102 of one of the stator core sections of the stator of fig. 4.

Fig. 6 shows another example of a stator core section.

Fig. 7 schematically illustrates an example of a tool for manufacturing stator core sections as described herein.

Figs. 8a-f schematically illustrate an example of the pressing process for manufacturing stator core sections as described herein.

Fig. 9 shows an example of a cogging torque frequency spectrum of a modulated pole machine without cogging torque reduction, based on FFT analysis of a FEA analysis of a 1-phase MPM model.

Fig. 10 shows an example of a MPM cogging torque frequency spectrum with cogging torque reduction, based on FFT analysis of a FEA analysis of a 1-phase MPM model.

Fig. 11 shows an example of a 3-phase MPM cogging torque shape without cogging reduction; per phase and sum (3 phases) based on a FEA analysis of a 1-phase MPM model.

Fig. 12 shows an example of a 3-phase MPM cogging torque shape with cogging reduction; per phase and sum (3 phases) based on a FEA analysis of a 1-phase MPM model.

**Detailed description**

In the following description, reference is made to the accompanying figures, which show by way of illustration how the invention may be practiced.

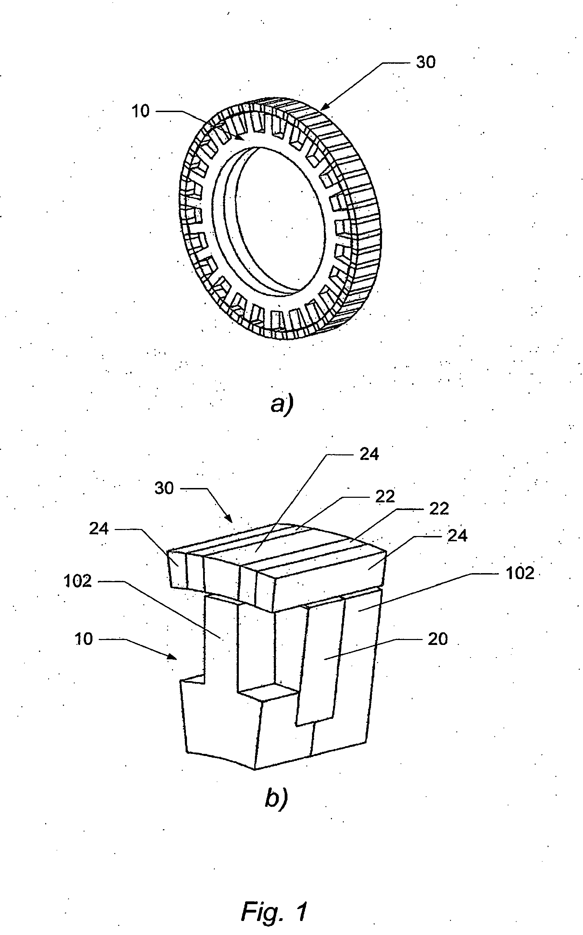

Fig. 1 illustrates an example of a modulated pole machine. In particular, fig. 1 shows the active parts of a single phase, e.g. a one-phase machine or a phase of a multi-phase machine. Fig. 1 a shows a perspective view of the active parts of the machine including a stator 10 and a rotor 30. Fig. 1 b shows an enlarged view of a part of the machine.

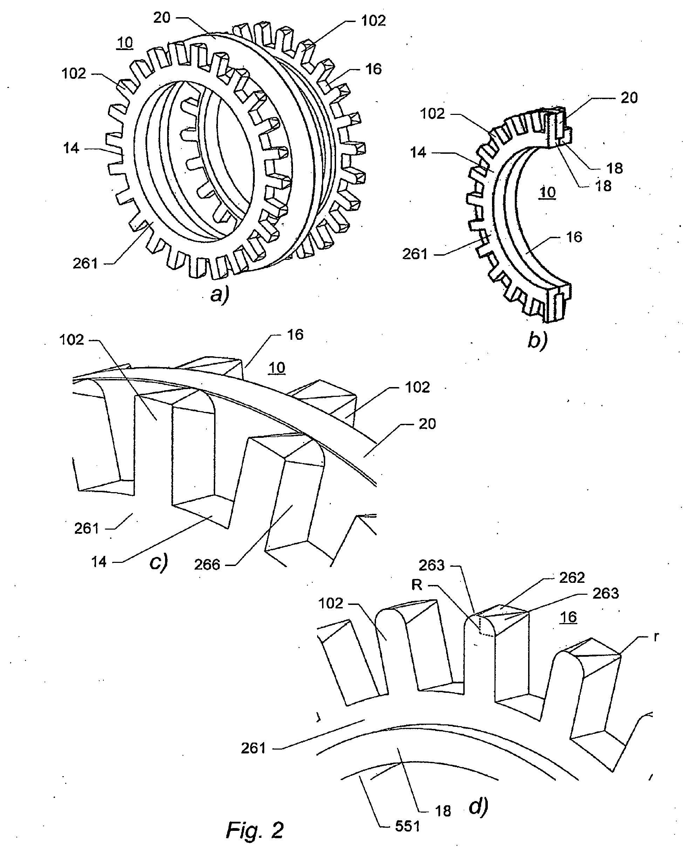

Fig. 2 illustrates an example of the stator 10 of the modulated pole machine of fig. 1. In particular, fig. 2a shows an exploded view of the stator 10, illustrating two stator core sections 14, 16, and a winding 20. Fig. 2b shows a cut-view of the stator 10, fig. 2c shows an enlarged view of a part of the stator 10, while fig. 2d shows an enlarged view of a part of one of the stator core sections 16.

The machine comprises a stator 10 which comprises a central single winding 20 that magnetically feeds multiple teeth 102 formed by a soft magnetic core structure. The stator core is formed around the winding 20 while for other common electrical machine structures the winding is formed around the individual tooth core section. More particularly the modulated pole electric machine of figs. 1 and 2 comprises two stator core sections 14, 16 each including a plurality of teeth 102 and being substantially annular, a winding 20 arranged between the first and second annular stator core sections, and a rotor 30 including a plurality of permanent magnets 22. Further, the stator core sections 14, 16, the coil 20 and the rotor 30 are encircling a common geometric axis, and the plurality of teeth 102 of the two stator core sections 14, 16 are arranged to protrude towards the rotor 30 for forming a closed circuit flux path. The stator teeth of the two stator core sections 14, 16 are circumferentially displaced in relation to each other.

Each stator section comprises an annular core back portion 261 and a flux bridge or yoke component 18 providing a flux path between circumferentially displaced teeth of the two stator core sections. In the machine in figures 1 and 2 the stator teeth protrude in a radial direction towards the rotor, in this case with the rotor surrounding the stator. However, the stator could equally well be placed exteriorly with respect to the rotor. Embodiments of the stator described herein may be used in single and/or in multi-phase machines. Similarly, embodiments of the stator described herein may be used in rotary machines, such as inner and outer rotor machines and/or in linear machines.

The active rotor structure 30 is built up from an even number of segments 22, 24 wherein half of the number of segments - also called rotor pole sections 24 - is made of soft magnetic material and the other half of the number of segments is made of permanent magnetic material 22. These segments may be produced as individual components. The permanent magnets 22 are arranged so that the magnetization directions of the permanent magnets are substantially circumferential, i.e. the north and the south poles, respectively, face in a substantially circumferential direction. Further, every second permanent magnet 22, counted circumferentially is arranged having its magnetization direction in the opposite direction in relation to its neighboring permanent magnets. The magnetic functionality of the soft magnetic pole sections 24 in the desired machine structure is fully three dimensional and each soft magnetic pole section 24 is able to efficiently carry varying magnetic flux with high magnetic permeability in all three space directions.

This design of the rotor 30 and the stator 10 has the advantage of enabling flux concentration from the permanent magnets 22 so that the surface of the rotor 30 facing a tooth of the stator 10 may present the total magnetic flux from both of the neighboring permanent magnets 22 to the surface of the facing tooth. The flux concentration may be seen as a function of the area of the permanent magnets 22 facing each pole section 24 divided with the area facing a tooth. In particular, due to the circumferential displacement of the teeth, a tooth facing a pole section results in an active air gap that only extends partly across the axial extent of the pole section. Nevertheless, the magnetic flux from the entire axial extent of the permanent magnets is axially and radially directed in the pole section towards the active air gap. These flux concentration properties of each pole section 24 make it possible to use weak low cost permanent magnets as permanent magnets 22 in the rotor and makes it possible to achieve very high air gap flux densities. The flux concentration may be facilitated by the pole section being made from magnetic powder enabling effective three dimensional flux paths. Further, the design also makes it possible to make more efficient use of the magnets than in corresponding types of machines.

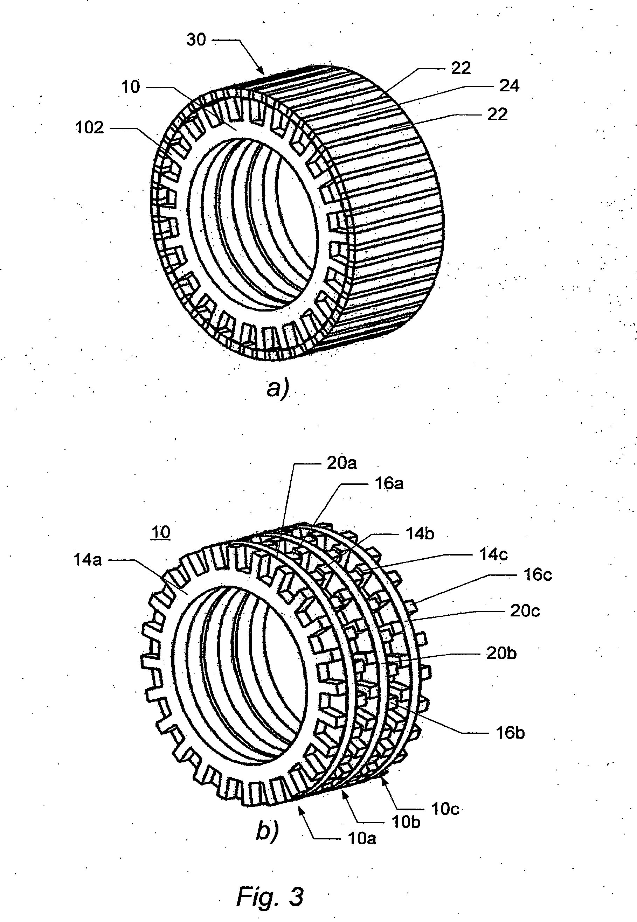

Still referring to figs. 1 and 2, the single phase stator 10 may be used as a stator of a single-phase machine as illustrated in figs. 1 and 2, and/or as a stator phase of a multi-phase machine, e.g. one of the stator phases 10a-c of the machine of fig. 3. The stator 10 comprises two identical stator core sections 14, 16, each comprising a number of teeth 102. Each stator core section is made of soft magnetic powder, compacted to shape in a press tool. When the stator core sections have identical shapes, they may be pressed in the same tool. The two stator core sections are then joined in a second operation, and together form the stator core with radially extending stator core teeth, where the teeth of one stator core section are axially and circumferentially displaced relative to the teeth of the other stator core section.

Each of the stator core sections 14, 16 may be compacted in one piece. Each stator core section 14, 16 may be formed as an annular disc having a central, substantially circular opening defined by a radially inner edge 551 of an annular core back portion 261. The teeth 102 protrude radially outward from a radially outer edge of the annular disc-shaped core back. The annular part between the inner edge 551 and the teeth 102 provides a flux path and a side wall of a circumferential cavity accommodating the coil 20. Each stator core section comprises a circumferential flange 18 at or near the inner edge 551. In the assembled stator the circumferential flange 18 is arranged on the inner side of the stator core section, i.e. the side facing the coil 20 and the other stator core section. In the embodiment shown in figs 1 and 2, the stator core sections 14, 16 are formed as identical components. In particular both stator core sections comprise a flange 18 protruding towards the respective other stator core section. In the assembled stator, the flanges 18 abut each other and form an axial flux bridge allowing the provision of an axial magnetic flux path between the stator core sections. In the assembled stator for an outer rotor machine the coil thus encircles the stator core back formed by flanges 18.

Each of the teeth 102 has an interface surface 262 facing the air gap. During operation of the machine, the magnetic flux is communicated through the interface surface 262 via the air gap and through a corresponding interface surface of a pole piece of the rotor. The interface surface 262 is delimited in the circumferential direction, i.e. along the direction of motion of the rotor, by edges 263. Hence, the edges 263 connect the interface surface 262 with the respective side faces 266 of the tooth that face the neighbouring teeth. It will be appreciated that the P/M (Powder Metallurgy) technology imposes a certain minimum radius of the edges 263, i.e. they are rounded edges rather than complete sharp edges. Depending on the complexity of the compacting tool, the compaction pressure, the tool material etc., the smallest obtainable radius may e.g. be in the range of 0.25 to 0.5 mm. This radius is set by the shape of the die. However, as can be most clearly seen in fig. 2d, the radius of the edges 263 varies along the edges 263, i.e. the radius is smaller at one lateral side of the tooth than on the other lateral side. In particular, the radius increases from the side of the tooth distal to the winding towards the side of the tooth proximal to the winding. In the example of fig. 2d, the radius increases linearly. In some embodiments, the radius of the edges 263 increases gradually from a minimum radius r, e.g. approximately 0.3mm, to a maximum radius R of up to half the tooth width. Design optimization may be made by changing the small and large radii, R and r in such a way that the cogging torque is reduced. Three dimensional electromagnetic Finite Element software is a suitable tool for this design process. The optimum shape may depend on the number of poles and teeth, the size of the machine etc. Limitations of the P/M technology may impose a lower limit on the smallest radius, r, e.g. 0.25 to 0.35 mm (depending on component size and die material). An upper limit may be imposed on the maximum radius R in that the sum of maximum radii of the two edges should normally be no larger than the width of the toot in circumferential direction. For example, when both edges have the same maximum radius, the upper limit for the maximum radius R may be when the two curves meet in the middle of the tooth forming a complete half circle. For example, the optimisation may comprise selecting the small radius r to be a minimum radius compatible with the pressing tool and process for manufacturing a compacted stator core section by powder technology, by estimating (e.g. by means of a finite element analysis) the resulting cogging torque for a plurality of choices of the large radius R, and by selecting the large radius R to be a radius resulting in a minimal estimated cogging torque.

In the example of fig. 2d, both edges 263 are round with the same radius, and the radius changes in the same manner. However, it will be appreciated that the radii of the leading and trailing edges may differ and/or vary along the respective edge in a different manner.

Consequently, the teeth of the stator core sections 14, 16 are shaped such that the width -measured in the circumferential direction- of the interface surface gradually increases from the side proximal to the winding towards the side distal to the winding. During operation of the machine, the interface surface 262 thus gradually overlaps the corresponding surface of the rotor pole pieces and magnets instead of instantly. In embodiments of the stator described herein, the stator teeth thus have edges that are shaped in such a way so as to allow them to smoothly pass each other and the rotor pole sections. It will be appreciated from e.g. fig. 2d that the interface surface 262 has a substantially constant distance from the rotor. It will be appreciated that the shaping of the teeth described herein may be combined with other measures for reducing cogging torque, e.g. a modified rotor design with skewed pole pieces and permanent magnets.

Fig. 3a illustrates an example of a 3-phase modulated pole machine, while fig. 3b shows an example of a stator of the machine of fig. 3a. The machine comprises a stator 10 and a rotor 30. The stator 10 contains 3 stator phase sections 10a, b, c each as described in connection with figs. 1 and 2. In particular each stator phase section comprises a respective stator component pair 14a, 16a; 14b, 16b; and 14c, 16c, respectively, each holding one circumferential winding 20a-c, respectively.

Hence, as in the example of figs. 1 and 2, each electric modulated pole machine stator phase section 10a-c of fig. 3 comprises a central coil 20a-c, e.g. a single winding, that magnetically feeds multiple teeth 102 formed by the soft magnetic core structure. More particularly, each stator phase 10a-c of the shown electric modulated pole machine comprises two stator core sections 14, each including a plurality of teeth 102 and being substantially annular, a coil 20 arranged between the first and second circular stator core sections. Further, the stator core sections 14 and the coil 20 of each, stator phase encircle a common axis, and the plurality of teeth 102 of the stator core sections 14 are arranged to protrude radially outward. In the example of fig. 3 the rotor 30 is arranged coaxially with the stator 10 and encircling the stator so as to form an air gap between the teeth 102 of the stator and the rotor. The rotor may be provided as alternating permanent magnets 22 and pole pieces 24 as described in connection with figs. 1 and 2, but axially extending across all stator phase sections.

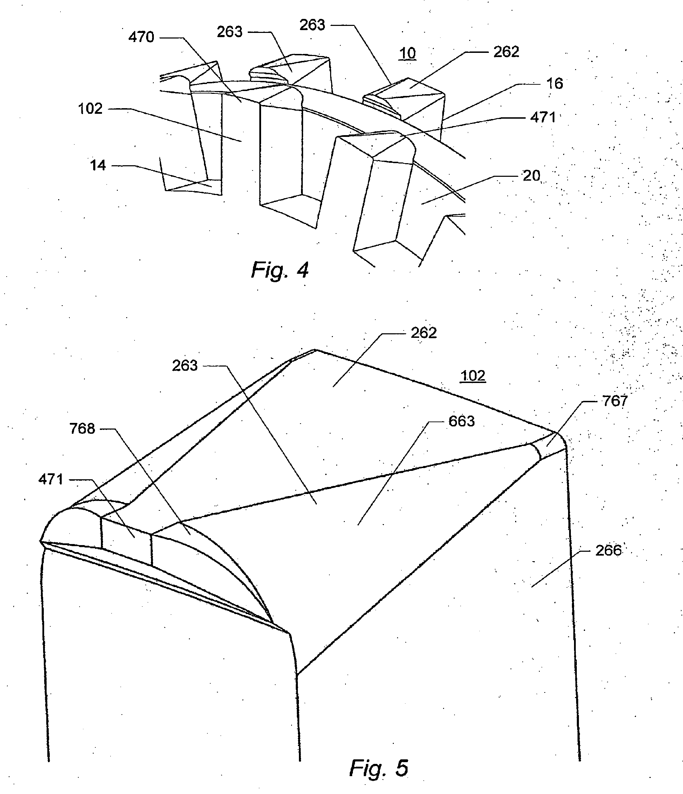

The embodiments of the stator described in connection with figs. 1-3 have teeth without so-called claws. However, as will be described in the following with reference to figs. 4-5, small claws may be added without increase of tool cost and still improving the motor performance.

Fig. 4 shows another example of a stator for a modulated pole machine. Fig. 5 shows a more detailed view of one of the teeth 102 of one the stator core sections of the stator of fig. 4. The stator 10 described with reference to fig. 4-6 may be used in a pole machine as described in figs. 1 and 3. The stator 10 comprises two annular stator core sections 14, 16, each comprising a plurality of teeth 102 protruding radially towards the rotor so as to form an active air gap. The teeth of the respective stator core sections are circumferentially displaced relative with each other. Each tooth defines an interface surface 262 facing the air gap. The interface surface is delimited in the direction of motion by round edges 263 the radius of curvature of which varies along the respective edge 263, all as described in connection with figs. 1-2.

However, the teeth of the stator of figs. 4-5 comprise claws extending axially across a part of the axial extent of the winding 20. In particular, each tooth comprises a radially extending base part and a top part 470 that extends radially further outwards than the winding 20. The top part comprises a claw member 471 extending axially from the tooth towards the winding such that the top part extends axially across a part of the axial extent of the winding. Consequently, the tooth has an interface surface 262 that has an overlap portion which overlaps the radially outward surface of the winding. If the claw member is sufficiently small, the stator pole sections may still be efficiently manufactured by a powder compaction process. For example the stator core sections may define a gap between them for accommodating the winding. Each of the claw members may extend axially towards the other stator by an axial extent less than half the axial width of the gap, e.g. less than half the axial width of the winding. In some embodiments the claw member axially projects less than 3mm from the stator core section.

As can be most clearly seen from fig. 5, the edges 263 have constant radius portions 767 and 768 at each lateral end of the edge. The constant radius portion 767 proximal to the winding 20 has a smaller radius, e.g. a minimum radius determined by the pressing tool and process as described above, than the constant radius portion 768 distal to the winding. The edge 263 further comprises a varying radius portion 663 extending between the constant radius portions and having a radius of curvature that gradually, e.g. linearly, increases from the smaller radius of constant radius portion 767 to the larger radius of the constant radius portion 768. It will, be appreciated that this form of the edges may also be used in teeth without claws, e.g. the teeth described in connection with figs. 1-2.

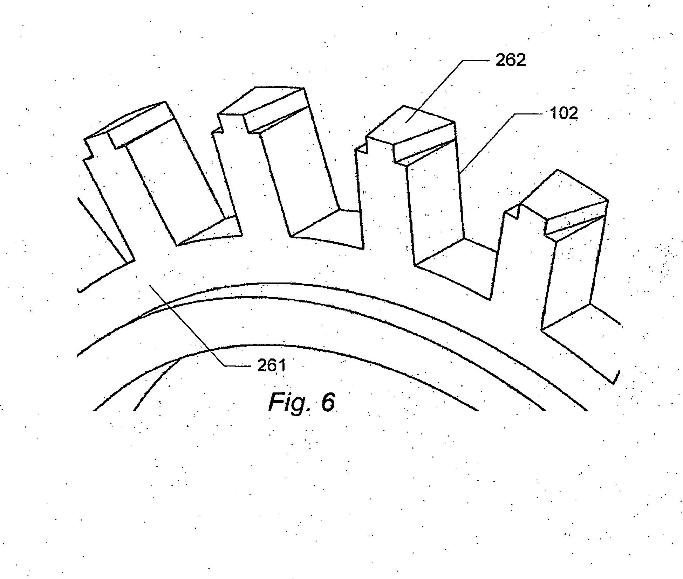

Fig. 6 shows an example of a stator core section comprising a stator core back 261 from which a plurality of teeth 102 extend radially outwards. The teeth being arranged along the direction of motion and each tooth has an interface surface 262. The interface surface has a width in the direction of motion that varies in the axial direction, i.e. normal to a plane spanned by the direction of motion and the radial.

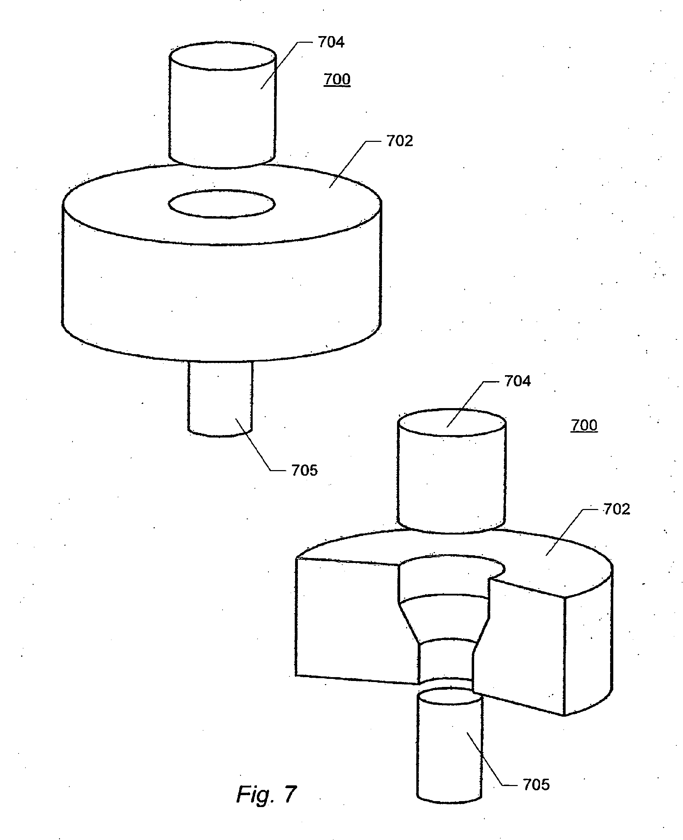

Embodiments of the stator core sections described herein may be efficiently manufactured and shaped using P/M technology. P/M is a well established technique for producing components out of metal powder using a tool and a press as illustrated by figs. 7-8. Fig. 7 schematically illustrates a tool for pressing a soft magnetic component made from soft magnetic powder. In particular, fig. 7a shows a pressing tool with a die 702, a single upper punch 704 and a single lower punch 705. Fig. 7b shows a cut view of the tool of fig. 7a.

For ease of presentation, the process will be illustrated with reference to a simple component 803. However, it will be appreciated that the process and tool described in the following is well-suited for manufacturing embodiments of the stator core sections described herein. The P/M process comprises filling a die 702 with metal powder 703 followed by a pressing using a number of punches 704 and 705. The pressing is followed by a sintering at high temperature (e.g. in the region of 1000°C) or a heat treatment at lower temperature (e.g. up to approximately 650°C). The tool, generally designated 700, may comprise a die 702 and at least one upper and/or one lower punch 704 and 705, respectively. The technology may be used for large scale production of high quality metal components. The MPM type of electrical machine is very well suited for utilizing the benefits of the P/M technology. For making electrical motors using P/M, the powder may be made out of electrically insulted iron powder called soft magnetic powder as described above.

In order to produce the stator, with teeth shaped as described herein, the tool die 702 may be specifically adapted to have a so-called shaped die geometry, a technique known as such in the art. In embodiments of the tool only the die 702 is shaping the tooth. The exact shape of the die depends on the actual component to be manufactured. In the case of MPM SMC stator components described herein, the shape may be made by gradually increasing a tooth fillet radius of the die from approximately 0.3mm to a radius maximum of half the tooth width. In order to allow a reliable pressing process, the larger radius is close to the side where the flux-bridge flange 18 is situated, i.e. the 'winding side'. This is true both with and without claw.

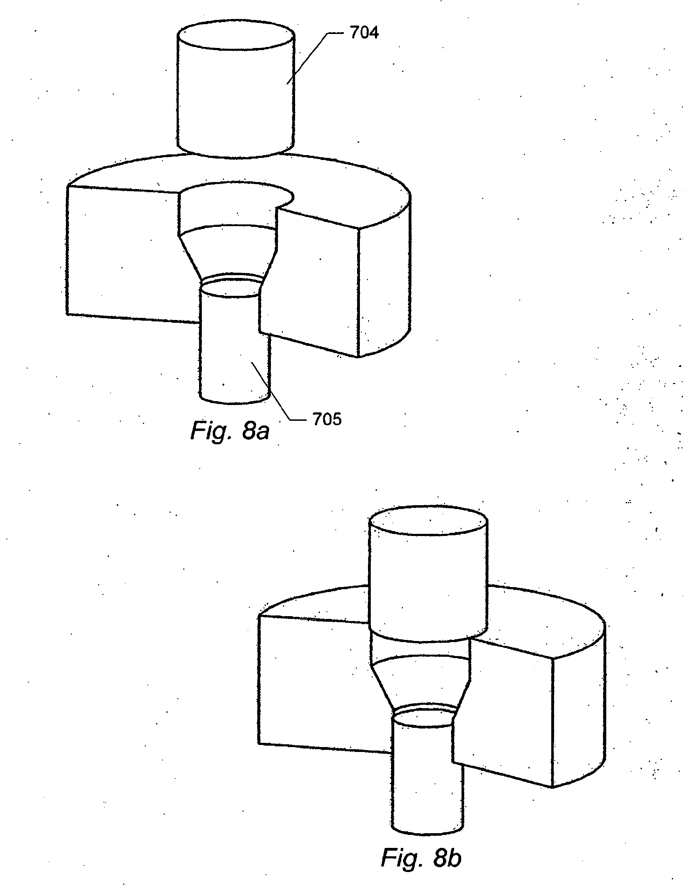

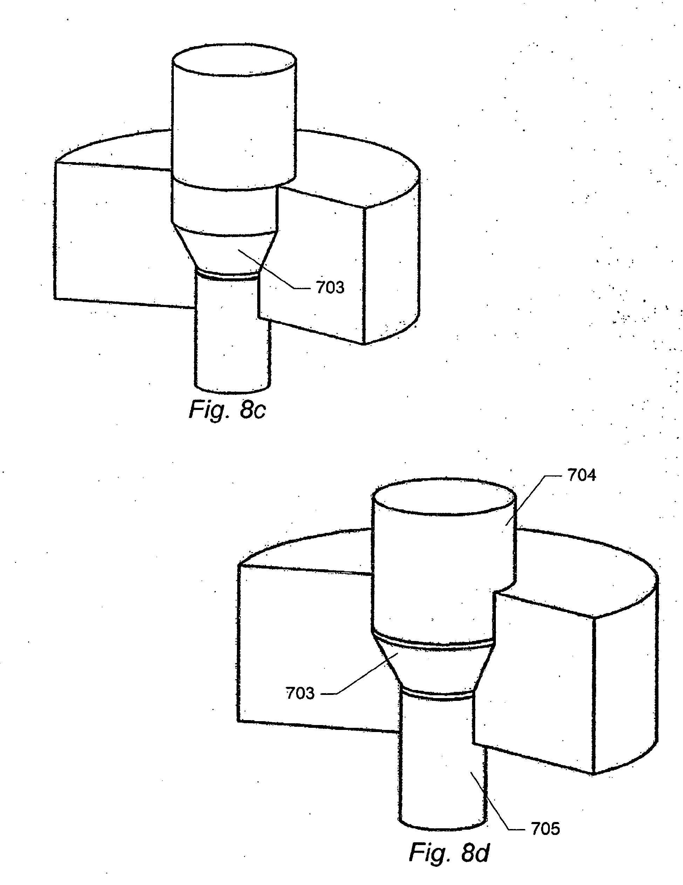

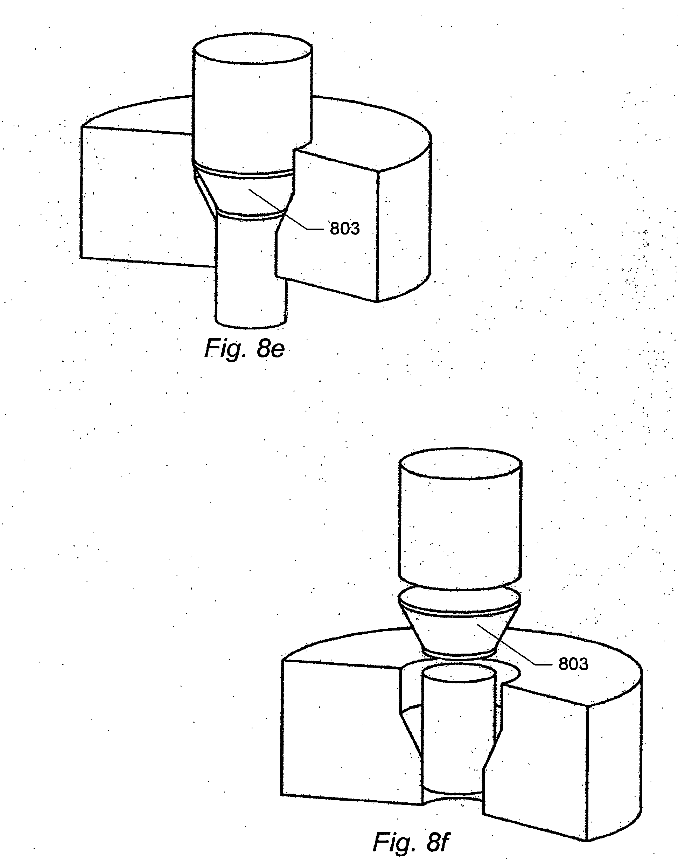

Fig. 8 illustrates the pressing process using the tool of fig. 7.

Fig. 8a illustrates the tool in a powder filling position where the lower punch 705 is withdrawn from the die but still blocking the bottom opening of the die, while the upper punch is withdrawn from the die leaving the top opening of the die unobstructed allowing powder to be inserted through the top opening. Fig. 8b shows the closed die after completion of the filling process (the powder is not shown in fig. 8b for clarity). Fig. 8c shows the closed die including the powder 703. Fig. 8d shows the tool with the pressed component, i.e. where both the bottom and the top punches have been inserted into the die so as to compact the powder in the shaped portion of the die. Fig. 8e shows the component ejection step where the punches are moved upwards so as to eject the component 803 from the die. Fig. 8f shows the ejected component 803.

The reduction of cogging torque by shaping the stator teeth as described herein may be analyzed using Finite element analysis (FEA) combined with Fast Fourier transform analysis (FFT). It can be shown that for an MPM the 3-phase cogging torque is the sum of the 6th and 18th harmonic amplitude of the 1-phase cogging torque times 3, according to the formula:

$$\text{MPM 3-phase cogging torque} = 3 * (\text{6th harmonic ampl. of 1 phase} + \text{18th harmonic ampl. of 1 phase}).$$

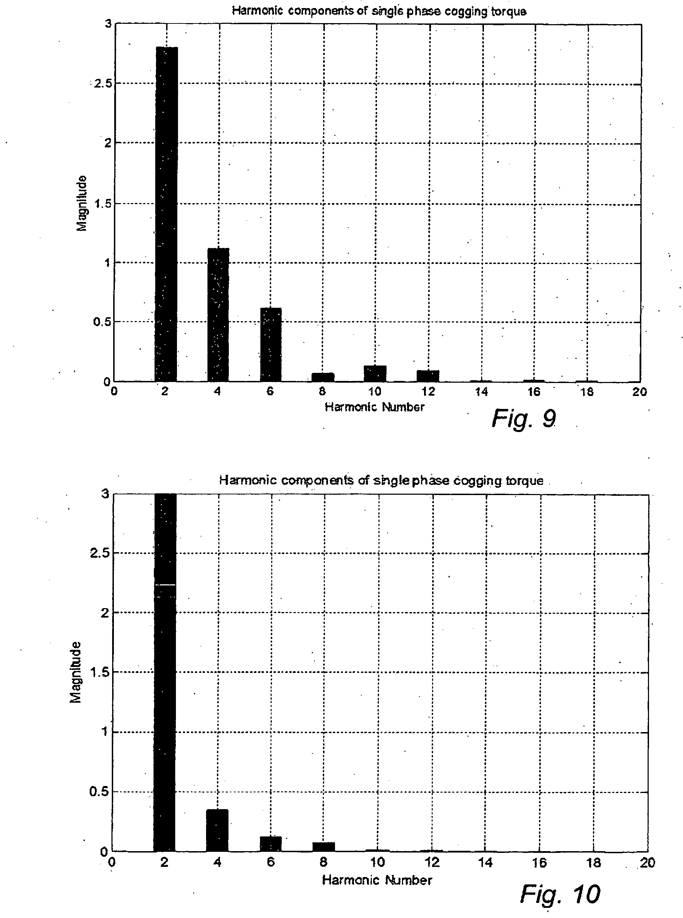

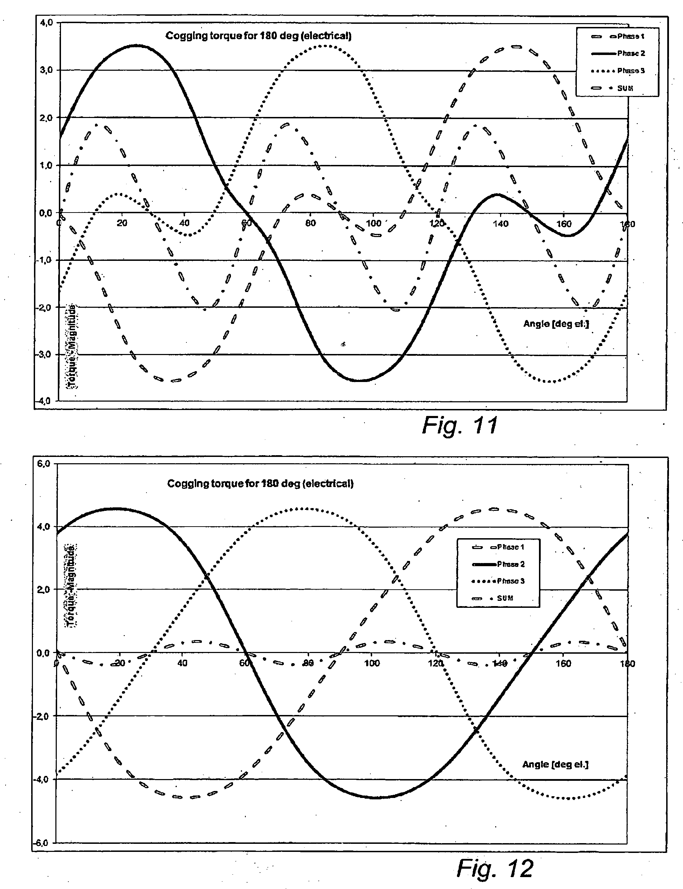

The 6th harmonic is dominating the contribution. Figure 9 is an example of the harmonic spectra for an MPM without cogging reduction. Figure 10 is an example of the harmonic spectra for an MPM with cogging reduction as described herein. Figure 9 shows that the magnitude of the 6th harmonic is about 0.6. If the 18th harmonic is neglected, (as can be seen from fig. 9, it is clearly very small), the 3-phase cogging torque can be calculated to a magnitude of 1.8. This can be compared with maximum magnitude of the 3-phase cogging torque curve in figure 11. The same analysis can be done for the cogging torque design also resulting in a very close agreement.

The cogging torques of the same example MPM are shown in figs. 11 and 12 with and without cogging torque reduction, respectively.

The cogging torque reduction obtained by the tooth shaping described herein can be close to 100%. In the example it is about 80%. How much reduction is obtained for a specific machine may depend on parameters such as the number of poles and the number of phases. In the above example, the number of phases is 3, but it will be appreciated that the tooth shaping described herein may be applied to any MPM stator having teeth in SMC. In case the number of phases differs from 3 it is not necessarily the 6th and 18th harmonic that contributes to the cogging torque.

Although some embodiments have been described and shown in detail, the invention is not restricted to them, but may also be embodied in other ways within the scope of the subject matter defined in the following claims. In particular, it is to be understood that other embodiments may be utilised, and that structural and functional modifications may be made without departing from the scope of the present invention.

Embodiments of the invention disclosed herein may be used for a direct wheel drive motor for an electric-bicycle or other electrically driven vehicle, in particular a light-weight vehicle. Such applications may impose demands on high torque, relatively low speed and low cost. These demands may be fulfilled by a motor with a relatively high pole number in a compact geometry using a small volume of permanent magnets and wire coils to fit and to meet cost demands by the enhanced rotor assembly routine.

In device claims enumerating several means, several of these means can be embodied by one and the same item of hardware. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

**Claims**

1. A modulated pole machine comprising a stator (10), a moving device (30), and an active gap between respective interface surfaces of the moving device and the stator for communicating magnetic flux between the stator and the moving device, the moving device being adapted to move relative to the stator in a direction of motion, wherein the stator comprises a first stator core section (14) comprising a stator core back (261) from which a plurality of teeth (102) extend, each tooth extending in a respective first direction towards the moving device, the teeth being arranged along the direction of motion, each tooth having at least one side wall (266) facing a neighbouring tooth and an interface surface (262) facing the active gap, the interface surface and the side wall forming an edge (263) connecting the interface surface (262) and the side wall (266); wherein the edge is round defining a radius of curvature in a plane spanned by the direction of motion and the first direction; and wherein the radius of curvature varies along a lateral direction normal to said plane and , wherein the stator comprises a second, like stator core section (16) arranged side by side to the first stator core section (14) in the lateral direction, wherein the teeth (102) of the first and second stator core sections are displaced relative to each other in the direction of motion;
**characterised in that** the radius of curvature of said teeth (102) of the first stator core section increases in the direction towards the second stator core section (16).

2. A modulated pole machine according to claim 1, wherein the stator comprises a winding (20) arranged between the first and second stator core sections.

3. A modulated pole machine according to any one of claims 1 or 2, wherein at least a part of the interface surface has a substantially constant distance from the moving device (30); wherein said part of the interface surface has a width in the direction of motion; and wherein the width varies in the lateral direction.

4. A modulated pole machine according to any one of claims 1 through 3, wherein the modulated pole machine is a linear machine.

5. A modulated pole machine according to any one of claims 1 through 4, wherein the modulated pole machine is a rotary machine, and wherein the moving device (30) is a rotor.

6. A modulated pole machine according to claim 5, wherein the rotor is configured to generate a rotor magnetic field for interaction with a stator magnetic field of the stator, the rotor comprising a plurality of permanent magnets (22) magnetised in the circumferential direction of said rotor so as to generate the rotor magnetic field, the permanent magnets being separated from each other in the circumferential direction of the rotor by axially extending rotor pole sections (24) for directing the rotor magnetic field generated by said permanent magnets in at least a radial and an axial direction.

7. A modulated pole machine according to any one of claims 1 through 6, wherein the stator device (10) and/or the moving device (30) provide a three-dimensional (3D) flux path including a flux path component in the transverse direction relative to the direction of motion.

**Patentansprüche**

1. Modulierte Polmaschine, umfassend einen Stator (10), eine sich bewegende Vorrichtung (30) sowie einen wirksamen Spalt zwischen jeweiligen Kopplungsflächen der sich bewegenden Vorrichtung und des Stators zum Übertragen von magnetischem Fluss zwischen dem Stator und der sich bewegenden Vorrichtung, wobei die sich bewegende Vorrichtung so ausgelegt ist, dass sie sich bezogen auf den Stator in eine Bewegungsrichtung bewegt, der Stator einen ersten Ständerblechpaketabschnitt (14) umfasst, der einen Ständerblechpaket-Rücken (261) umfasst, von dem aus eine Mehrzahl von Zähnen (102) verläuft, jeder Zahn in eine jeweilige erste Richtung auf die sich bewegende Vorrichtung zu verläuft, die Zähne entlang der Bewegungsrichtung angeordnet sind, jeder Zahn mindestens eine Seitenwand (266) aufweist, die einem benachbarten Zahn zugewandt ist, sowie eine Kopplungsfläche (262), die dem wirksamen Spalt zugewandt ist, die Kopplungsfläche und die Seitenwand eine Kante (263) bilden, die die Kopplungsfläche (262) und die Seitenwand (266) verbindet; wobei die Kante rund ist und so einen Krümmungsradius in einer Ebene definiert, die von der Bewegungsrichtung und der ersten Richtung überspannt wird; und wobei sich der Krümmungsradius entlang einer seitlichen Richtung senkrecht zu der Ebene verändert und der Stator einen zweiten, ähnlichen Ständerblechpaketabschnitt (16) umfasst, der in der seitlichen Richtung neben dem ersten Ständerblechpaketabschnitt (14) angeordnet ist, wobei die Zähne (102) des ersten und zweiten Ständerblechpaketabschnitts in der Bewegungsrichtung zueinander versetzt sind;
**dadurch gekennzeichnet, dass** der Krümmungsradius der Zähne (102) des ersten Ständerblechpaketabschnitts in der Richtung auf den zweiten Ständerblechpaketabschnitt (16) größer wird.

2. Modulierte Polmaschine nach Anspruch 1, wobei der Stator eine Wicklung (20) umfasst, die zwischen dem ersten und zweiten Ständerblechpaketabschnitt angeordnet ist.

3. Modulierte Polmaschine nach Anspruch 1 oder 2, wobei zumindest ein Teil der Kopplungsfläche einen im Wesentlichen gleichbleibenden Abstand zur sich bewegenden Vorrichtung (30) aufweist; der Teil der Kopplungsfläche eine Breite in der Bewegungsrichtung aufweist; und sich die Breite in der seitlichen Richtung verändert.

4. Modulierte Polmaschine nach einem der Ansprüche 1 bis 3, wobei es sich bei der modulierten Polmaschine um eine lineare Maschine handelt.

**5.** Modulierte Polmaschine nach einem der Ansprüche 1 bis 4, wobei es sich bei der modulierten Polmaschine um eine rotierende Maschine handelt, und es sich bei der sich bewegenden Vorrichtung (30) um einen Rotor handelt.

**6.** Modulierte Polmaschine nach Anspruch 5, wobei der Rotor so ausgelegt ist, dass er ein Rotormagnetfeld für die Wechselwirkung mit einem Statormagnetfeld des Stators erzeugt, wobei der Rotor eine Mehrzahl von Dauermagneten (22) umfasst, die in der Umfangsrichtung des Rotors magnetisiert sind, damit sie das Rotormagnetfeld erzeugen, wobei die Dauermagneten in der Umfangsrichtung des Rotors durch axial verlaufende Rotorpolabschnitte (24) voneinander getrennt sind, damit das von den Dauermagneten erzeugte Rotormagnetfeld in zumindest eine radiale und eine axiale Richtung geführt wird.

**7.** Modulierte Polmaschine nach einem der Ansprüche 1 bis 6, wobei die Statorvorrichtung (10) und/oder die sich bewegende Vorrichtung (30) einen dreidimensionalen (3D) Flussweg bereitstellen, einschließlich eines Flusswegbestandteils in der Querrichtung bezogen auf die Bewegungsrichtung.

**Revendications**

**1.** Machine polaire modulée constituée d'un stator (10), d'un dispositif mobile (30), et d'un entrefer actif entre les surfaces d'interface respectives du dispositif mobile et du stator pour la communication d'un flux magnétique entre le stator et le dispositif mobile, le dispositif mobile étant adapté pour se déplacer par rapport au stator dans une direction de déplacement, dans laquelle le stator est constitué d'une première section de noyau de stator (14) constituée d'un dos de noyau de stator (261) à partir duquel une pluralité de dents (102) s'étend, chaque dent s'étendant dans une première direction respective en direction du dispositif mobile, les dents étant disposées le long de la direction de déplacement, chaque dent ayant au moins une paroi latérale (266) faisant face à une dent voisine et une surface d'interface (262) faisant face à l'entrefer actif, la surface d'interface et la paroi latérale formant une arrête (263) connectant la surface d'interface (262) et la paroi latérale (266) ; dans laquelle l'arrête définit de façon circulaire un rayon de courbure dans un plan formé par la direction de déplacement et la première direction ; et dans laquelle le rayon de courbure varie le long d'une direction latérale perpendiculaire audit plan et, dans laquelle le stator est constitué d'une seconde section de noyau de stator similaire (16) disposée côte à côte par rapport à la première section de noyau de stator (14) dans la direction latérale, dans laquelle les dents (102) de la première et de la seconde section de noyau de stator se déplacent les unes par rapport aux autres dans la direction de déplacement ;
**caractérisée en ce que** le rayon de courbure desdites dents (102) de la première section de noyau de stator augmente en direction de la seconde section de noyau de stator (16).

**2.** Machine polaire modulée selon la revendication 1, dans laquelle le stator est constitué d'un bobinage (20) disposé entre la première et la seconde section de noyau de stator.

**3.** Machine polaire modulée selon l'une quelconque des revendications 1 ou 2, dans laquelle au moins une partie de la surface d'interface a une distance sensiblement constante du dispositif mobile (30) ; dans laquelle ladite partie de la surface d'interface a une largeur dans la direction de déplacement ; et dans laquelle la largeur varie dans la direction latérale.

**4.** Machine polaire modulée selon l'une quelconque des revendications 1 à 3, dans laquelle la machine polaire modulée est une machine linéaire.

**5.** Machine polaire modulée selon l'une quelconque des revendications 1 à 4, dans laquelle la machine polaire modulée est une machine tournante, et dans laquelle le dispositif mobile (30) est un rotor.

**6.** Machine polaire modulée selon la revendication 5, dans laquelle le rotor est configuré pour générer un champ magnétique de rotor pour une interaction avec un champ magnétique de stator du stator, le rotor étant constitué d'une pluralité d'aimants permanents (22) magnétisés dans la direction circonférentielle dudit rotor de façon à générer le champ magnétique de rotor, les aimants permanents étant séparés les uns des autres dans la direction circonférentielle du rotor par des sections polaires de rotor (24) s'étendant axialement pour la direction du champ magnétique de rotor généré par lesdits aimants permanents dans au moins une direction radiale et axiale.

**7.** Machine polaire modulée selon l'une quelconque des revendications 1 à 6, dans laquelle le dispositif de stator (10) et/ou le dispositif mobile (30) fournissent un circuit de flux magnétique tridimensionnel (3D) incluant une composante de circuit de flux magnétique dans la direction transverse par rapport à la direction de déplacement.

10 ⟶

30 ⟶

*a)*

24

30 ⟶

22

22

24

24

102

102

10 ⟶

20

*b)*

*Fig. 1*

*Fig. 2*

a)

b)

*Fig. 3*

Fig. 4

Fig. 5

Fig. 6

704

700

702

705

704

700

702

705

*Fig. 7*

*Fig. 8a*

*Fig. 8b*

Fig. 8c

703

704

703

705

Fig. 8d

Fig. 8e

Fig. 8f

Harmonic components of single phase cogging torque

Fig. 9

Harmonic components of single phase cogging torque

Fig. 10

*Fig. 11*

*Fig. 12*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007024184 A, Jack
- US 20080018194 A1
- US 6545383 B1
- US 6348265 B